# EUROPEAN PATENT APPLICATION

(11) **EP 4 679 569 A1**
(43) Date of publication of application: **14.01.2026**
(21) Application number: 24904017.1
(22) Date of filing: 15.11.2024
(51) Int. Cl.: H01M 10/6567, H01M 10/613, H01M 50/317, H01M 50/24, H01M 10/625, H01M 50/593, B60K 11/02, B60L 50/64

(54) **BATTERY MODULE, BATTERY PACK, AND VEHICLE INCLUDING SAME**

(30) Priority: 12.12.2023 KR 20230179773
(71) Applicant: LG Energy Solution, Ltd., Seoul 07335 (KR)
(72) Inventor: YEO, Kyeong-Mo, Daejeon 34122 (KR)
(74) Representative: Plasseraud IP
(86) International application number: PCT/KR2024/018087
(87) International publication number: WO 2025/127451

(57) **Abstract**

Provided is a battery module capable of improving the cooling performance of battery cells by directly cooling the battery cells. A battery module of the present disclosure includes a cell module assembly including a plurality of battery cells; a module case that supports a bottom and side surfaces of the cell module assembly and opens a top of the cell module assembly; and a top cooling cover assembly that is coupled to the module case and covers the top of the cell module assembly to form a sealed structure and cools the battery cells from the top to the bottom thereof by directly spraying insulating oil.

## Description

### TECHNICAL FIELD

The present disclosure relates to a battery module, a battery pack and a vehicle including the same, and more specifically, to a battery module having a structure in which a cooling medium for cooling battery cells is directly applied to the battery cells in a spray manner, a battery pack and a vehicle including the same. This application is based on and claims priority from Korean Patent Application No. 10-2023-0179773, filed on December 12, 2023, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to electric vehicles driven by electric power sources. Such secondary batteries are attracting attention as energy sources to improve eco-friendliness and energy efficiency in that they have not only a primary advantage of dramatically reducing the use of fossil fuels, but also no by-products generated from the use of energy.

Battery modules that electrically connect a plurality of battery cells and medium and large battery packs that include the same as unit modules are used in medium and large devices such as vehicles due to the need for high output and large capacity. In battery modules and battery packs, technologies capable of efficiently cooling the heat generated from battery cells become increasingly important as the required battery capacity increases, and cooling of battery modules and battery packs is an important factor in improving the performance of electric vehicles.

Conventional battery modules use bottom cooling using a heat sink or side cooling using a cooling tube. These methods are water-cooling methods, which indirectly cool battery cells through the flow of cooling water passing through the internal flow path of the heat sink or cooling tube.

In the case of battery modules that utilize an indirect water-cooling method using cooling water, the cooling performance thereof is limited because the cooling water does not directly contact the battery cells but indirectly contacts them through the module housing that accommodates the battery cells.

Additionally, since it is bottom cooling or side cooling, the path through which heat is transferred is long, and thus there is also a limit to improving cooling performance. In particular, in the case of bottom cooling, the heat generated from the battery cells is transferred to the heat sink on one side of the module housing for cooling, so that a heat transfer path is not easily provided to the other side of the module housing. Accordingly, there is a limit in which temperature deviations between one end and the other end of the battery cell are deepened, or the overall cooling efficiency is not satisfactory.

In addition, there is also a problem that the cooling effect of the battery cell decreases as it moves away from the inlet compared to the battery cell located close to the inlet of the cooling water. Since the temperature of the cooling water is raised by the heat transferred from the battery cell while the cooling water enters the inlet of the battery module, circulates, and is discharged, the cooling effect of the battery cell decreases by the time the cooling water is discharged to the outlet of the battery module. For this reason, there is also a problem that temperature deviations between battery cells inevitably exist depending on the location of the battery cell within the battery module.

If temperature deviations are not resolved, problems of safety and durability of the battery module arise. If the cooling efficiency is not good, the deterioration of battery cells may be accelerated, or the inability to respond quickly when thermal runaway occurs in some battery cells may lead to thermal runaway propagation and, in severe cases, disasters such as ignition and explosion of the battery module or battery pack including the same, which may cause not only property damage but also safety issues.

Recently, a battery module that further applies a potting resin to a water-cooled battery module has also been developed to prevent thermal propagation (TP), and in this case, weight and cost increase. Additionally, there is a loss in manufacturing time.

To solve the problem of this indirect water-cooling method, there is a need for developing a battery module having a cooling structure in which a cooling medium for cooling may be directly introduced into the module housing and be in direct contact with the battery cells.

In the case of a battery module having such a direct cooling structure, it is necessary to be configured such that temperature deviations between battery cells do not occur depending on the location of the battery cells in the battery module. Furthermore, it is necessary to maintain airtightness so that the cooling medium does not leak out of the module housing.

### DISCLOSURE

### Technical Problem

The present disclosure is designed to solve the problems of the related art, and therefore the present disclosure is directed to providing a battery module capable of improving the cooling performance of battery cells by directly cooling the battery cells.

The present disclosure is also directed to providing a battery module in which temperature deviations between battery cells are reduced or eliminated depending on the location of the battery cells within the battery module.

The present disclosure is still also directed to providing a battery pack and a vehicle including such a battery module.

### Technical Solution

A battery module of the present disclosure for solving the above-described problems includes a cell module assembly including a plurality of battery cells; a module case that supports a bottom and side surfaces of the cell module assembly and opens a top of the cell module assembly; and a top cooling cover assembly that is coupled to the module case and covers the top of the cell module assembly to form a sealed structure and cools the battery cells from the top to the bottom thereof by directly spraying insulating oil.

The module case may include a bottom plate where the cell module assembly is seated on a top surface; and a module frame fixing the cell module assembly seated on the bottom plate.

The top cooling cover assembly may include a plurality of cooling pipes.

Preferably, the top cooling cover assembly may include a top cover that has a receiving space on the inner side and is open at a bottom; and a plurality of cooling pipes that are assembled in the receiving space and have bottom surfaces exposed to a top of the battery cells.

The battery module may include a plurality of inlet ports on one side of the top cover and a plurality of pipe covers on the other side of the top cover.

An O-ring may be interposed between the inlet port and an assembly surface of the top cover.

The pipe cover may be assembled by insert press-fit into the top cover.

The cooling pipe may have an open center along a length direction to allow the insulating oil to flow therein, wherein one end of the cooling pipe may be connected to the inlet port, and the other end of the cooling pipe may be assembled with the pipe cover and closed.

The cooling pipe may be elongated in a length direction of the battery module along a row in which the battery cells are disposed and may be disposed to be spaced apart along a width direction of the battery module.

A plurality of perforated holes for spraying the insulating oil may be formed in the cooling pipe.

The perforated holes may be formed on a bottom surface side of the cooling pipe and may be positioned in a zigzag manner along a length direction of the cooling pipe.

The battery module may further include a venting device capable of discharging the internal air pressure of the battery module to the outside.

The venting device may be included in the top cover.

The battery module may further include a gasket interposed between the module frame and the bottom plate.

The module frame may be inserted into an edge of the bottom plate, and the gasket may be positioned between an inner surface of the edge of the bottom plate and an outer surface of the module frame.

The battery module may further include an insulating sheet on the bottom plate.

An outlet port for circulation of the insulating oil may be provided in the module case.

A battery pack of the present disclosure includes one or more battery modules of the present disclosure.

A vehicle of the present disclosure includes one or more battery modules of the present disclosure.

The battery module may receive insulating oil and hydraulic pressure from an oil pump of the vehicle.

The vehicle may include a vehicle cooling system, wherein insulating oil of the vehicle cooling system may be supplied to the battery module, wherein the insulating oil may cool battery cells in the battery module and be then discharged from the battery module to be cooled in the vehicle cooling system and then supplied back to the battery module and circulated.

The vehicle according to the present disclosure may further include a pressure control valve for controlling a flow rate and hydraulic pressure of insulating oil supplied to the battery module.

### Advantageous Effects

According to one aspect of the present disclosure, direct cooling of a battery cell is implemented through a method of spraying insulating oil. This method is a method capable of increasing heat transfer efficiency compared to a conventional water-cooling indirect cooling method by directly cooling the battery cell. Accordingly, the cooling performance of the battery cell may be improved by directly cooling the battery cell.

According to the present disclosure, since the method of circulating the cooling water within the battery module is not used, there is no problem that the temperature of the cooling water near the outlet of the battery module rises and the cooling effect of the battery cell decreases. According to the present disclosure, each battery cell may be uniformly cooled regardless of the position of the battery cell within the battery module. Accordingly, deviations of heating temperature may be minimized. Therefore, the cooling efficiency may be further improved by minimizing temperature deviations between each battery cell.

According to the present disclosure, there is no need to apply a potting resin to prevent TP. Therefore, the weight and cost of the battery module are not increased, and there is no loss in manufacturing time.

According to the present disclosure, it is possible to use insulating oil that is circulated through a vehicle cooling system of a vehicle while maintaining airtightness so that the insulating oil does not leak.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery module according to an embodiment of the present disclosure.
FIG. 2 is an exploded perspective view of a battery module according to an embodiment of the present disclosure.
FIG. 3 is an exploded perspective view of a top cooling cover assembly included in the battery module of FIG. 1.
FIG. 4 is a top view of a battery cell array in a battery module.
FIG. 5 is a bottom view of a cooling pipe.
FIG. 6 is a cross-sectional view taken along line A-A' of FIG. 1.
FIG. 7 is a view showing a method of spraying insulating oil within a battery module.
FIG. 8 is a schematic view of a battery pack according to an embodiment of the present disclosure.
FIG. 9 is a schematic view of a vehicle according to an embodiment of the present disclosure.
FIG. 10 is a view for describing an insulating oil circulation structure in a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiment described in this specification and the configuration shown in the drawings are only some of most preferred embodiments of the present disclosure, not intended to entirely represent the technical aspects of the present disclosure, so it should be understood that various equivalents and modifications may be made thereto at the time of filing the present application.

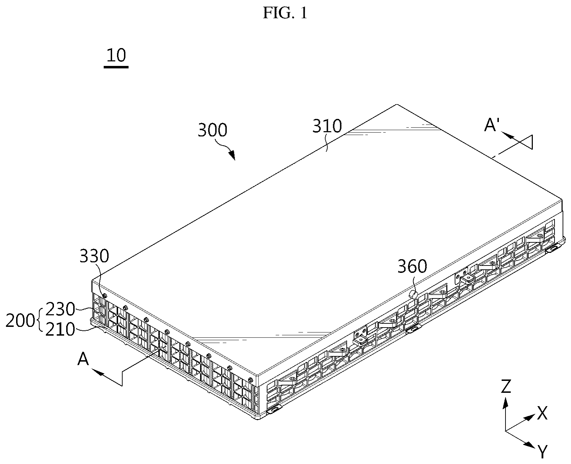

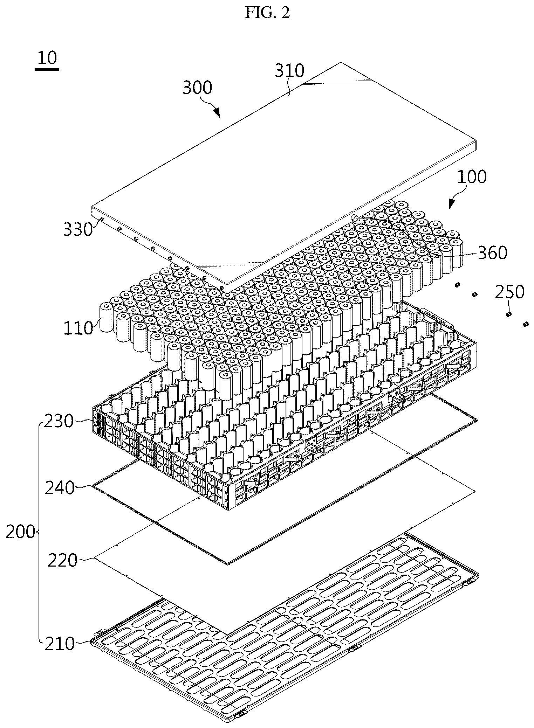

FIG. 1 is a perspective view of a battery module according to an embodiment of the present disclosure. FIG. 2 is an exploded perspective view of a battery module according to an embodiment of the present disclosure.

Referring to FIGS. 1 and 2, a battery module 10 according to an embodiment of the present disclosure may be a three-dimensional structure having a predetermined length, width, and height in the X-axis, Y-axis, and Z-axis directions, respectively. And, the battery module 10 includes a cell module assembly 100, a module case 200, and a top cooling cover assembly 300.

The battery module 10 may have a roughly cuboidal appearance due to the coupling of the module case 200 and the top cooling cover assembly 300. When the battery module 10 is mounted on an electric vehicle such as an EV or HEV, the mounting space is limited due to vehicle components disposed at a high degree of integration, and thus the battery module 10 is preferably formed in a cuboidal structure so that it may be mounted in a narrow space such as between the driver's seat and the passenger seat.

In the battery module 10, the cell module assembly 100 includes a plurality of battery cells 110. The battery cell 110 refers to a secondary battery that includes an electrode assembly, an electrolyte, and a pouch case accommodating the electrode assembly, and may be provided as a cylindrical secondary battery, a pouch-type secondary battery, or a prismatic secondary battery. Hereinafter, in this embodiment, a plurality of battery cells 110 are described as being limited to cylindrical secondary batteries as shown in FIG. 2. These battery cells 110 may be a plurality of cylindrical batteries that are arrayed along columns and rows and stand upright in a vertical direction. As an example, the battery cell 110 may be a 4680-type battery cell. Here, 4680 represents a form factor. The first two numbers in the form factor represent the diameter of the secondary battery, and the remaining numbers represent the height of the secondary battery. The 4680 cell is highly efficient and large in size compared to the existing 18650 cell or 21700 cell.

The module case 200 supports a bottom and side surfaces of the cell module assembly 100 and opens a top of the cell module assembly 100. The module case 200 may be a single component.

As another example, the module case 200 may include a bottom plate 210 and a module frame 230. The bottom plate 210 may cover a bottom surface of the cell module assembly 100. The bottom plate 210 may be provided as a roughly plate-shaped body having an area on which the cell module assembly 100 may be seated. The cell module assembly 100 is seated on a top surface of the bottom plate 210. The bottom plate 210 may be made of a metal material or may be manufactured as a plastic injection molded product. For example, the bottom plate 210 may be made of a plastic material (e.g., polycarbonate or the like) having both insulation and flame retardancy. In the case of being made of a metal material, or in order to provide more insulation, an insulating sheet 220 may be further included on the bottom plate 210. For example, the insulating sheet 220 may be a polycarbonate sheet. As another example, an insulating coating layer may be included on a top surface of the bottom plate 210. The insulating coating layer may be formed by coating, applying, or attaching an insulating material of any one of silicone resin, polyamide, and rubber. According to this insulating coating layer configuration, the insulating coating effect may be maximized with a minimum amount of coating. Additionally, the insulating coating layer is applied to a top surface of the bottom plate 210, and thus the insulation between the battery cell 110 and the bottom plate 210 may be enhanced.

The module frame 230 fixes the cell module assembly 100 seated on the bottom plate 210. In the example shown, the module frame 230 is composed of a plurality of bar-type members including cylindrical curved sections on one or both sides to conform to the outer circumferential surface shape of the battery cells 110 that may be disposed along a row, but the shape of the module frame 230 may vary without being limited thereto.

The bottom plate 210 and the module frame 230 may be assembled with each other. The assembly may be done in various ways, such as fitting, bolting, bonding, welding, and the like. The module frame 230 may also be made of a metal material or manufactured as a plastic injection molded product. For example, the bottom plate 210 may be made of a plastic material (e.g., polycarbonate or the like) having both insulation and flame retardancy. In the case of being made of a metal material, or in order to provide more insulation, an insulating coating layer may be further included on the inner surface of the module frame 230. The insulating coating layer may be formed by coating, applying, or attaching an insulating material of any one of silicone resin, polyamide, and rubber. According to this insulating coating layer configuration, the insulating coating effect may be maximized with a minimum amount of coating. Additionally, the insulating coating layer is applied to the inner surface of the module frame 230, and thus the insulation between the battery cell 110 and the module frame 230 may be enhanced.

The battery module 10 of the present disclosure cools the battery cell 110 by directly spraying a cooling medium. The cooling medium may be cooling water, but is preferably a liquid having insulating properties. In particular, it is an insulating oil. The battery module 10 of the present disclosure or a battery pack including the same may be mounted on a vehicle such as an electric vehicle, and the insulating oil may be an oil similar to engine oil or gear oil of the vehicle.

The cooling water applied to the existing battery module has no insulating performance. Poor sealing and impact may cause cracks in the flow path, which may lead to a risk of short circuits, ignition, or explosion when cooling water leaks into electronic components. Additionally, since the cooling water for vehicles is a mixture of water and antifreeze, there is a limitation that periodic replacement is required due to tis vaporization characteristics. Insulating oil has high withstand voltage performance. According to the present disclosure, short circuits or safety issues due to leakage may be prevented by using insulating oil. Insulating oil has no vaporization characteristics, and thus it may be used semi-permanently without replacement.

In the present disclosure, the cooling medium is directly sprayed onto the battery cell 1 10 to cool the battery cell 110. According to the present disclosure, insulating oil may be sprayed from the top to the bottom of the battery cell 110, in particular by a direct cooling method using insulating oil. The top cooling cover assembly 300 included in the battery module 10 of the present disclosure refers to an assembly component for directly cooling the battery cell 110 by spraying a cooling medium from the top to the bottom of the battery cell 110 in this way.

The top cooling cover assembly 300 is coupled to the module case 200 and covers the top of the cell module assembly 100 to form a sealed structure. In doing so, the battery cell 110 is cooled from the top to the bottom by directly spraying insulating oil.

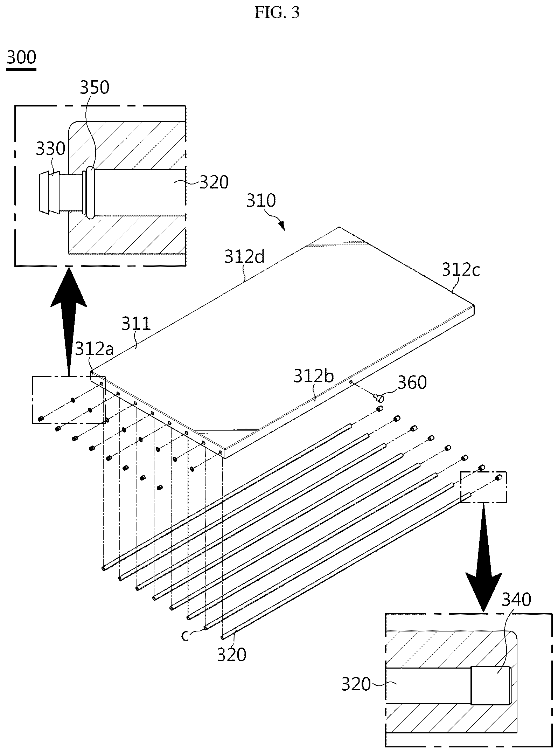

FIG. 3 is an exploded perspective view of a top cooling cover assembly included in the battery module of FIG. 1.

Referring to FIG. 3, a basic unit of the top cooling cover assembly 300 is a plurality of cooling pipes 320. According to an embodiment of the present disclosure, the top cooling cover assembly 300 further includes a top cover 310. The cooling pipe 320 and the top cover 310 may be integrally assembled. Even without the top cover 310, a structure in which a plurality of cooling pipes 320 are positioned at the top of the cell module assembly 100 may be possible.

The top cover 310 has a receiving space on the inner side and is open at a bottom. This structure may contribute to the weight lightening of the battery module 10. It may also facilitate coupling to the module case 200.

For example, the top cover 310 may have a flat box lid shape including a rectangular top surface 311 and four side walls 312a to 312d extending downward from the top surface 311. Since the inside is hollow, the weight lightening of the battery module 10 may be achieved, and cooling pipes 320 may be configured to be mounted on the side walls 312a, 312c facing each other.

The top cover 310 may be made of an insulating resin for electrical insulation. For example, the top cover 310 may be manufactured as a plastic injection molded product. This top cover 310 may have the advantage of not only ensuring insulation from the battery cell 110, but also ensuring convenience in processing and requiring less manufacturing labor.

The cooling pipes 320 are assembled in the receiving space, and the bottom surfaces are exposed to a top of the battery cells 110. The cooling pipe 320 is one in which insulating oil flows. The cooling pipe 320 has an open center C along a length direction to allow insulating oil to flow therein. The cooling pipe 320 may be made of a steel material. Since the cooling pipe 320 should withstand hydraulic pressure, it is preferably made of a rigid steel material.

The cooling pipes 320 are elongated in a length direction of the battery module 10 along a row in which the battery cells 110 are disposed, and are disposed to be spaced apart along a width direction of the battery module 10.

Meanwhile, in this embodiment, the cooling pipe 320 has a circular flat cross-section, but a steel pipe having a square flat cross-section may also be used.

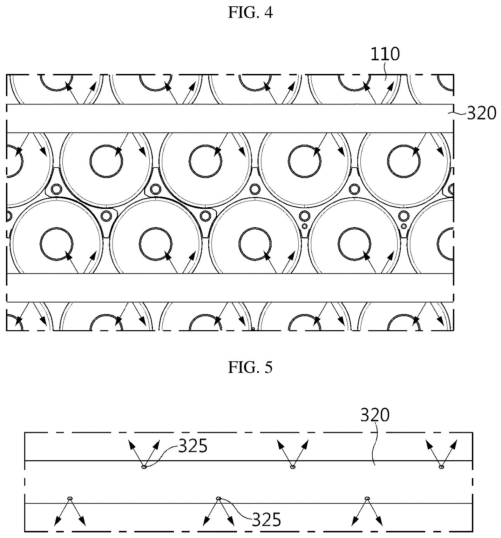

FIG. 4 is a top view of a battery cell array in a battery module. FIG. 5 is a bottom view of a cooling pipe.

Referring to FIGS. 4 and 5, a plurality of perforated holes 325 for spraying insulating oil are formed in the cooling pipe 320. The perforated holes 325 are formed on a bottom surface side of the cooling pipe 320 and may be positioned in a zigzag manner along a length direction of the cooling pipe 320.

In FIGS. 4 and 5, the spraying pattern of the insulating oil is shown by arrows. The position, number, spacing, and spraying angle of the perforated holes 325 may be adjusted so that no battery cell is left untouched by the insulating oil through the perforated holes 325 of the cooling pipe 320.

For example, the form of spraying the insulating oil by the perforated holes 325 may be configured to be a full cone pattern in which insulating oil may be sprayed in the angular space between two arrows drawn in one perforated hole 325. The full cone pattern allows spraying of the entire circular surface, and the spraying angle may be adjusted. Instead, the form of spraying the insulating oil by the perforated holes 325 may be configured to be a solid pattern in which insulating oil may be sprayed in the direction of each of the two arrows drawn in one perforated hole 325. The solid pattern allows a straight-line spray, and may indicate a spraying angle of 2 degrees or less.

Referring to FIG. 3 again, the battery module may include a plurality of inlet ports 330 on one side of the top cover 310 and a plurality of pipe covers 340 on the other side of the top cover 310. For example, the inlet ports 330 may be located on one side wall 312a of the top cover 310, and the pipe covers 340 may be located on the other side wall 312c of the top cover 310.

The inlet port 330 is provided on the top cover 310 and connected to one end of a cooling pipe 320. The inlet port 330 is formed on one side of the cooling pipe 320 in a length direction. An O-ring 350 may be interposed between the inlet port 330 and the assembly surface of the top cover 310 for preventing backflow of insulating oil due to high pressure flow rate and for sealing. The O-ring 350 is a waterproof component that prevents the insulating oil from leaking out of the battery module 10. The inlet port 330 may be inserted into the cooling pipe 320. The insulating oil flowing in from the inlet port 330 may flow in the center C of the cooling pipe 320.

The pipe cover 340 is applied to generate/maintain pressure in the pipe. Through this, even at a location of a battery cell 110 relatively far from the inlet port 330, uniform cooling performance may be implemented. The pipe cover 340 may be assembled by insert press-fit into the top cover 310.

The pipe cover 340 is formed on the other side of the cooling pipe 320 in a length direction. The pipe cover 340 may be a cylindrical stopper with one side open. The other end of the cooling pipe 320 may be fitted into the pipe cover 340 and assembled. Through this, the other end of the cooling pipe 320 may be closed. In this embodiment, the cooling pipe 320 is inserted into the pipe cover 340.

The assembly process is as follows. The top cover 310 is provided in a form in which the pipe cover 340 is assembled by insert press-fit into the top cover 310. The cooling pipe 320 is inserted from one side of the top cover 310 and an end of the cooling pipe 320 is fitted into the pipe cover 340 located on the other side of the top cover 310. The assembly position of the cooling pipe 320 may be guided through the pipe cover 340 already located on the top cover 310. Then, an O-ring 350 is placed between the inlet port 330 and the assembly surface of the top cover 310, and the inlet port 330 is fitted into the remaining end of the cooling pipe 320 to complete the assembly. The above assembly process may be easily performed through a configuration in which the cooling pipe 320 is fitted into the pipe cover 340 and the inlet port 330 is fitted into the cooling pipe 320.

One end of the cooling pipe 320 is connected to the inlet port 330 located on one side wall 312a of the top cover 310, and the other end of the cooling pipe 320 is assembled with the pipe cover 340 located on the other side wall 312c of the top cover 310, so that the cooling pipe 320 is mounted on the side walls 312a, 312c. Insulating oil that flows from one end of the cooling pipe 320 into the cooling pipe 320 through the inlet port 330 may flow to the other end of the cooling pipe 320 that is closed by the pipe cover 340. The insulating oil, which is a cooling medium, may be sprayed toward the battery cell 110 located below the cooling pipe 320 through the perforated hole 325 formed in the cooling pipe 320 while flowing inside the cooling pipe 320.

Both ends of the cooling pipe 320 may be firmly supported through assembly with the top cover 310. The inlet port 330 and the pipe cover 340 are provided, and thus even if the battery module 10 moves, the cooling pipe 320 may be restricted from moving up, down, left, right, forward, and backward within the battery module 10, thereby preventing the movement. The cooling pipe 320, which may be made of steel, is heavier than other surrounding parts, so even a slight movement has a significant impact on the surrounding parts. According to the present disclosure, both ends of the cooling pipe 320 are firmly supported through assembly with the top cover 310, thereby providing structural integrity to the top cooling cover assembly 300 as an integral part. Movement of the cooling pipe 320 within the battery module 10 is prevented, which may guarantee the performance of the battery module 10 and allow the battery module 10 to be used safely for a long time. Additionally, the top cooling cover assembly 300, which is an integral part, is easy to handle during assembly because it is one part, and it may be simply coupled to the module case 200 to create a sealed structure, thereby increasing assemblability and productivity.

The coupling between the top cooling cover assembly 300 and the module case 200 may be accomplished by various methods such as fitting, bolting, adhesion, and welding. If necessary, waterproof components such as sealing strips may be positioned on the assembly surface of the top cooling cover assembly 300 and the module case 200 for waterproof performance, and the top cooling cover assembly 300 and the module case 200 may be assembled with each other.

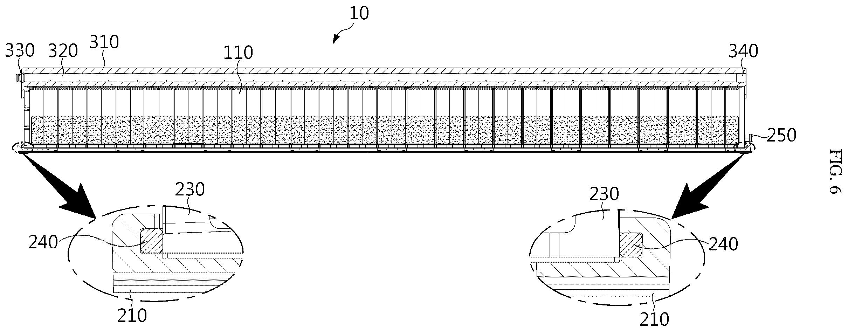

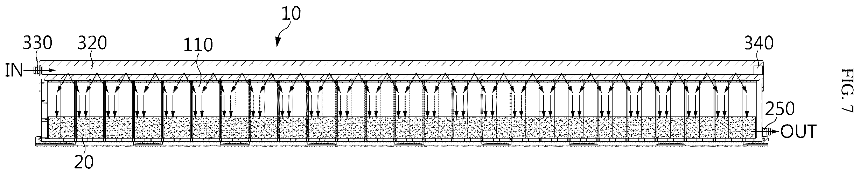

FIG. 6 is a cross-sectional view taken along line A-A' of FIG. 1. FIG. 7 is a view showing a method of spraying insulating oil within a battery module.

Referring to FIGS. 2, 6, and 7 together, insulating oil 20 may be introduced (IN in FIG. 7) from the outside of the battery module 10 through the inlet port 330. The insulating oil 20 flows inside the cooling pipe 320 and is sprayed toward the battery cells 110 through the perforated holes 325 as indicated by arrows in FIG. 7. Since the sprayed insulating oil 20 flows from the top to the bottom of the battery cell 110, a gasket 240 for sealing the insulating oil 20 between the module frame 230 and the bottom plate 210 may be further included. The gasket 240 is a waterproof component that prevents the insulating oil 20 from leaking out of the battery module 10. More specifically, a module frame 230 is inserted into an edge of the bottom plate 210, and the gasket 240 may be positioned between an inner surface of the edge of the bottom plate 210 and an outer surface of the module frame 230. The gasket 240 may be in the form of a band that follows the edge shape of the bottom plate 210.

The gasket 240 may be made of a material that exerts a predetermined elasticity so as to stably exert a desired sealing force by pressure applied during coupling, and may be compressed or deformed in a vertical direction by the pressure. The gasket 240 may be made of a rubber material, for example, an EPDM material.

In the case of a battery module having a direct cooling structure, it is necessary to maintain airtightness so that the cooling medium does not leak out of the module housing. According to the present disclosure, a waterproof structure may be implemented through the O-ring 350 and the gasket 240. In other words, the O-ring 350 and the gasket 240 may be inserted between parts requiring sealing and waterproof performance may be implemented through pressure. The O-ring 350 and the gasket 240 may have sufficient thickness between the parts requiring sealing. Accordingly, when the parts requiring sealing are coupled to each other, pressure is generated to compress the O-ring 350 and the gasket 240 interposed therebetween, so that the parts requiring sealing may be completely in close contact with each other. An excellent sealing waterproof structure may be implemented without causing defective factors and increasing costs while the assembly and manufacturing process is not very complicated.

An outlet port 250 for circulation of the insulating oil 20 is provided at the lower end of the battery module 10. Preferably, the outlet port 250 may be provided in the module case 200. The insulating oil 20 sprayed toward the battery cell 110 performs a cooling function while flowing in direct contact with the battery cell 110 from the top to the bottom of the battery cell 110, and then moves to the outside of the battery module 10 through such an outlet port 250 (OUT in FIG. 7).

As such, the present disclosure applies an oil-cooled direct cooling method that has a higher cooling heat transfer efficiency than a water-cooled indirect cooling method. The battery module 10 of the present disclosure may receive insulating oil 20 and hydraulic pressure from an oil pump of a vehicle equipped with this battery module 10. The insulating oil 20 may be sprayed through the perforated holes 325 of the cooling pipes 320 to cool each battery cell 110 uniformly and directly.

The insulating oil 20 introduced at high pressure into the inlet port 330 is sprayed into the battery cell 110 through the perforated holes 325 of the cooling pipe 320, thereby directly cooling the battery cell 110. Thus, the sprayed insulating oil 20 directly cools the entire battery cell 110 while flowing from the top to the bottom of the battery cell 110. At the same time, since the cooling pipe 320 is not in contact with the battery cell 110 like a conventional heat sink or cooling tube and the hydraulic pressure is maintained, it is possible to minimize temperature deviations by implementing uniform cooling performance between the battery cells 110 regardless of the location of the battery cell 110 in the battery module 10 or the distance from the inlet port 330.

Thereafter, the insulating oil 20 accumulated in the battery module 10 may be discharged and circulated through the outlet port 250. The insulating oil 20 discharged through the outlet port 250 may be re-cooled through the cooling system of a vehicle to repeat the above cooling method.

When directly cooling the battery cell 110 with the insulating oil 20, it is preferable to ensure that there are no parts where the insulating oil flow path is blocked to make cooling difficult. For example, it is preferable to place a gap between the battery cells 110 so that the insulating oil 20 may flow along the space between the battery cells 110. Furthermore, a gap may also be placed between the module frame 230 and the bottom plate 210 to allow the insulating oil 20 to flow. An appropriate structure may be applied to the coupling portion of the bottom plate 210 and the module frame 230 so that the module frame 230 may be spaced upward from the bottom plate 210 with a gap. And, a gasket 240 may be provided at the corresponding structural location as described above.

Meanwhile, referring to FIGS. 1 to 3 again, the battery module 10 of the present disclosure may further include a venting device 360 for maintaining the internal pressure of the battery module 10 at a constant level. The venting device 360 may be a breather. The venting device 360 may discharge the internal air pressure of the battery module 10 that is increased by the insulating oil to the outside. Through this, the internal pressure of the battery module 10 may be maintained at a constant level. The venting device 360 may be further included in the top cover 310.

According to the present disclosure, the cooled insulating oil is directly sprayed onto the battery cells 110 from above the battery cells 110 to increase cooling efficiency. Depending on the arrangement in which the battery cells 110 are arranged, perforated holes 325 may be applied in a zigzag pattern to the cooling pipe 320. By arranging the positions of the perforated holes 325 in a zigzag pattern rather than in a straight line, it is possible to directly cool the maximum number of battery cells 110 within a minimum volume. And, it is possible to implement uniform cooling performance among the battery cells 110.

The cooling pipes 320 are each independently disposed along the rows where the battery cells 110 are disposed. By disposing multiple cooling pipes independently rather than integrally, the flow loss in the pipes may be minimized and pressure equalization may be realized. The cooling pipes 320 are elongated along a length direction and are positioned to be spaced apart from each other along a width direction.

Meanwhile, insulating oil may include additives to maximize cooling capacity. For example, microcapsules containing a phase change material (hereinafter referred to as PCM) may be mixed and used. When using insulating oil including PCM-containing microcapsules, the insulating oil absorbs energy first in the case of heat generation of the battery cell 110, and when heat generation continues, secondary energy absorption is possible due to the phase change of the PCM material. For example, if a paraffin-based PCM material of 288 KJ/kg is applied at a phase change temperature of 70 °C: assuming 300 kJ of heat generation per cell, insulating oil including 1.1 kg of PCM and 0.8 g/cm³ in the module may be applied. The insulating oil may include a substance having a fire extinguishing function. Accordingly, even if a fire occurs inside the battery module 10, the fire may be quickly extinguished by the fire extinguishing substance.

As another example, insulating oil such as 3M Novec or the like may be used as the insulating oil. Such insulating oil has excellent insulating performance, which may allow cooling by direct contact with the battery cell 110, and it has varying boiling points, which may allow phase change cooling to be applied.

By controlling the speed of the inflow and discharge of the insulating oil, the battery module 10 may be filled with insulating oil for immersion cooling, or it may also be cooled without filling it.

In the case of being fully filled with insulating oil, it is possible to prevent unbalanced cooling from occurring depending on the angle when the battery is in operation, for example when driving an electric vehicle on a slope. According to the present disclosure, cooling may be performed while the insulating oil flows in a state of being fully filled inside the battery module 10.

According to the present disclosure, cooling may be performed while the insulating oil flows in a state of being not fully filled inside the battery module 10. In the case of using it without being fully filled, it is good to apply cooling using the phase change of the insulating oil.

According to the present disclosure, there is no need to apply a potting resin to prevent TP. Therefore, the weight and cost of the battery module 10 are not increased, and there is no loss in manufacturing time.

Meanwhile, a battery pack according to an embodiment of the present disclosure includes one or more battery modules 10 according to an embodiment of the present disclosure as described above. Additionally, a vehicle according to an embodiment of the present disclosure includes a battery module 10 or battery pack according to an embodiment of the present disclosure as described above.

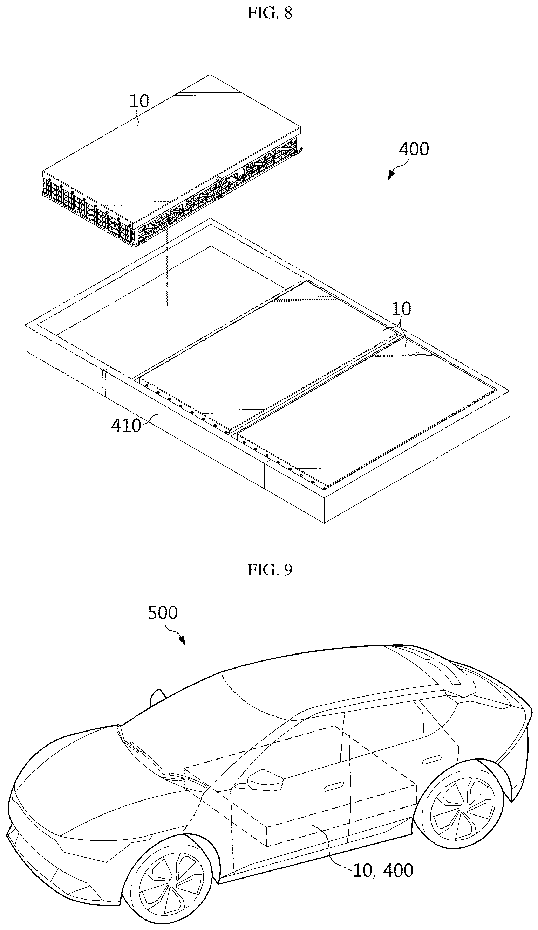

FIG. 8 is a schematic view of a battery pack according to an embodiment of the present disclosure.

The battery pack 400 according to an embodiment of the present disclosure may include one or more battery modules 10 according to an embodiment of the present disclosure as described above. The battery pack 400 according to the present disclosure may further include components of a battery pack known at the time of filing of the present disclosure, such as a BMS for integrated control of charging and discharging of one or more battery modules 10, a current sensor, a fuse, and the like. The BMS estimates the state of battery cells 110 in the battery pack 400 and manages the battery pack 400 using the estimated state information. For example, the BMS estimates and manages the battery pack 400 state information such as the state of charge (SOC), state of health (SOH), maximum input/output power allowance, and output voltage of the battery pack 400. And, using this state information, it is possible to control the charging or discharging of the battery pack 400, and furthermore, even to estimate the replacement time of the battery pack 400. The BMS manages and monitors the state of the battery cell 110, such as voltage, current, and temperature, and maintains the battery pack 400 in an optimal state based on this. That is, the BMS efficiently manages the battery pack 400 of an electric vehicle to ensure that the electric vehicle may drive stably, predicts the replacement time of the battery pack 400, and detects abnormal conditions of the battery pack 400 in advance to control it so that vehicle accidents are constrained.

The battery modules 10 may be arranged neatly in a pack case 410 in a substantially cuboidal form, and each battery module 10 is connected to secure the power required for driving a vehicle.

The pack case 410 is a container that accommodates the battery modules 10 in a fixed manner and is a box in a cuboidal form. And, this pack case 410 may be disposed in a predetermined location in the vehicle.

Additionally, in the battery pack 400 according to the present disclosure, the module case 200 described above may function as a pack case. In this case, components of the battery pack, such as a BMS, a busbar, and a relay, may be included inside the module case 200. In this case, it is also called cell to pack in that the battery cell 110 is directly accommodated in the pack case.

The battery pack 400 according to the embodiment of the present disclosure may be applied to various devices. Typical examples of such devices include means of transportation such as electric bicycles, electric vehicles, hybrid vehicles, and the like, but the present disclosure is not limited thereto. The battery pack 400 is suitable for utilization as a battery pack for an electric vehicle. Additionally, it may also be used as an energy source for an ESS. The ESS refers to a standalone system that stores power of several hundred kWH or more. The ESS is the core of the renewable energy industry. Since it is difficult to generate power from renewable energy such as solar and wind power at a desired time, it is important to store it and use it at a necessary time. The battery pack 400 according to the embodiment of the present disclosure may have an energy density and capacity suitable for use as an energy source for such an ESS.

FIG. 9 is a schematic view of a vehicle according to an embodiment of the present disclosure.

A vehicle 500 according to an embodiment of the present disclosure may include one or more battery packs 400 according to an embodiment of the present disclosure or one or more battery modules 10 according to an embodiment of the present disclosure. The vehicle 500 according to the present disclosure may be, for example, an electric vehicle, a hybrid vehicle, or a plug-in hybrid vehicle. The vehicle 500 includes a four-wheeled vehicle and a two-wheeled vehicle. The vehicle 500 operates by receiving power from the battery pack 400 or the battery module 10 according to an embodiment of the present disclosure.

In addition to the battery pack 400 or the battery module 10 according to an embodiment of the present disclosure, the vehicle 500 may further include various other components included in the vehicle, such as a vehicle body, a motor, or the like.

The battery pack 400 or the battery module 10 may be disposed at a predetermined location within the vehicle 500. The battery pack 400 or the battery module 10 may be electrically connected to the motor of the vehicle 500 through an inverter. The battery pack 400 or the battery module 10 may be used as an electric energy source to drive the vehicle 500 by providing driving power to the motor of the vehicle 500. In this case, the battery pack 400 or the battery module 10 is configured to have a high nominal voltage of 100 V or more. The battery pack 400 or the battery module 10 may be charged or discharged by an inverter according to the driving of the motor and/or internal combustion engine. The battery pack 400 or the battery module 10 may be charged by a regenerative charging device coupled to a brake.

In this way, the battery pack 400 or the battery module 10 provided in the vehicle 500 may provide electric energy required for various operations of the vehicle 500. Additionally, since the battery pack 400 or the battery module 10 has various effects mentioned above, the vehicle 500 including the same may also have such effects intact.

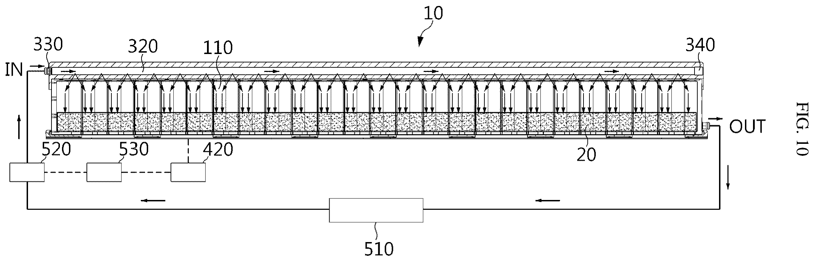

FIG. 10 is a view for describing an insulating oil circulation structure in a vehicle according to an embodiment of the present disclosure.

The battery module 10 or the battery pack 400 including the same may be cooled by utilizing the cooling insulating oil of the vehicle 500 in which it is mounted. The battery module 10 has a circulation path where the insulating oil is discharged to the outside of the battery module 10 through the outlet port 250, and after circulating through the vehicle cooling system 510, the insulating oil flows back into the battery module 10 through the inlet port 330. At this time, heat exchange/transfer of the insulating oil through the radiator of the vehicle cooling system 510 may be performed.

In this way, when the battery module 10 or the battery pack 400 of the present disclosure is mounted on the vehicle 500 and used, the circulation path of the insulating oil is as follows. A circulation structure of the vehicle cooling system 510 ⁻ cooling of the battery cell 110 in the battery module 10 → discharge to the outside of the battery module 10 → the vehicle cooling system 510 is included.

As such, the vehicle 500 may include a vehicle cooling system 510, wherein insulating oil of the vehicle cooling system 510 may be supplied to the battery module 10, wherein the insulating oil may cool battery cells 110 in the battery module 10 and be then discharged from the battery module 10 to be cooled in the vehicle cooling system 510 and then supplied back to the battery module 10 and circulated.

A pressure control valve 520 may be applied before the insulating oil flows into the inlet port 330 during this cooling circulation path. The pressure control valve 520 may be a solenoid valve that uses an electronic control method. By receiving a current that reflects a monitoring value based on a battery state and a vehicle driving state, the flow rate and hydraulic pressure of the insulating oil flowing into the battery module 10 may be controlled. According to the operation of the pressure control valve 520, the insulating oil may flow in a uniform amount, and the flow of the insulating oil may be guided so that the flow rate of the insulating oil is maintained above a certain level.

More specifically, the vehicle 500 includes an engine control unit (ECU) 530 that controls various electrical devices of the vehicle 500. The ECU 530 may perform various controls such as braking, acceleration, steering, charging, and the like. The ECU 530 may communicate with the BMS 420 of the battery module 10 or the battery pack 400 using a controller area network (CAN) communication protocol or the like.

When the BMS 420 transmits the battery state information obtained by checking the voltage, current, and the like of the battery cell 110 to the ECU 530, the ECU 530 may be configured to transmit a current reflecting a monitoring value based on the battery state and the vehicle driving state to the pressure control valve 520. The pressure control valve 520 may receive the corresponding current and control the flow rate and hydraulic pressure of the insulating oil flowing into the battery module 10.

In this way, according to the present disclosure, it is possible to use insulating oil circulated through the vehicle cooling system 510 of the vehicle 500 while maintaining airtightness so that the insulating oil does not leak.

The present disclosure has been described hereinabove with reference to specific embodiments. However, it will be clearly understood to those skilled in the art that various modified embodiments may be implemented within the technical scope of the present disclosure. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

### [Explanation of Reference Signs]

| | | | |
|---|---|---|---|
| 10: | battery module | 100: | cell module assembly |
| 110: | battery cell | 200: | module case |
| 210: | bottom plate | 220: | insulating sheet |
| 230: | module frame | 240: | gasket |
| 250: | outlet port | 300: | top cooling cover assembly |
| 310: | top cover | 320: | cooling pipe |
| 330: | inlet port | 340: | pipe cover |
| 350: | O-ring | 360: | venting device |
| 400: | battery pack | 410: | pack case |
| 420: | BMS | 500: | vehicle |
| 510: | vehicle cooling system | 520: | pressure control valve |
| 530: | ECU | | |

## Claims

1. A battery module, comprising:
a cell module assembly comprising a plurality of battery cells;
a module case that supports a bottom and side surfaces of the cell module assembly and opens a top of the cell module assembly; and
a top cooling cover assembly that is coupled to the module case and covers the top of the cell module assembly to form a sealed structure and cools the battery cells from the top to the bottom thereof by directly spraying insulating oil.

2. The battery module according to claim 1, wherein the module case comprises:
a bottom plate where the cell module assembly is seated on a top surface; and
a module frame fixing the cell module assembly seated on the bottom plate.

3. The battery module according to claim 1, wherein the top cooling cover assembly comprises:
a top cover that has a receiving space on the inner side and is open at a bottom; and
a plurality of cooling pipes that are assembled in the receiving space and have bottom surfaces exposed to a top of the battery cells.

4. The battery module according to claim 3, comprising a plurality of inlet ports on one side of the top cover and a plurality of pipe covers on the other side of the top cover.

5. The battery module according to claim 4, wherein an O-ring is interposed between the inlet port and an assembly surface of the top cover.

6. The battery module according to claim 4, wherein the pipe cover is assembled by insert press-fit into the top cover.

7. The battery module according to claim 4, wherein the cooling pipe has an open center along a length direction to allow the insulating oil to flow therein, wherein one end of the cooling pipe is connected to the inlet port, and the other end of the cooling pipe is assembled with the pipe cover and closed.

8. The battery module according to claim 7, wherein the cooling pipe is elongated in a length direction of the battery module along a row in which the battery cells are disposed and is disposed to be spaced apart along a width direction of the battery module.

9. The battery module according to claim 7, wherein a plurality of perforated holes for spraying the insulating oil are formed in the cooling pipe.

10. The battery module according to claim 9, wherein the perforated holes are formed on a bottom surface side of the cooling pipe and are positioned in a zigzag manner along a length direction of the cooling pipe.

11. The battery module according to claim 3, wherein a venting device capable of discharging the internal air pressure of the battery module to the outside is further included in the top cover.

12. The battery module according to claim 2, further comprising a gasket interposed between the module frame and the bottom plate.

13. The battery module according to claim 12, wherein the module frame is inserted into an edge of the bottom plate, and the gasket is positioned between an inner surface of the edge of the bottom plate and an outer surface of the module frame.

14. The battery module according to claim 2, further comprising an insulating sheet on the bottom plate.

15. The battery module according to claim 1, wherein an outlet port for circulation of the insulating oil is provided in the module case.

16. A battery pack comprising one or more battery modules according to any one of claims 1 to 15.

17. A vehicle comprising one or more battery modules according to any one of claims 1 to 15.

18. The vehicle according to claim 17, wherein the battery module receives insulating oil and hydraulic pressure from an oil pump of the vehicle.

19. The vehicle according to claim 18, comprising a vehicle cooling system,
wherein insulating oil of the vehicle cooling system is supplied to the battery module, wherein the insulating oil cools battery cells in the battery module and is then discharged from the battery module to be cooled in the vehicle cooling system and then supplied back to the battery module and circulated.

20. The vehicle according to claim 18, further comprising a pressure control valve for controlling a flow rate and hydraulic pressure of insulating oil supplied to the battery module.
